(19) Europäisches Patentamt
European Patent Office
Office européen des brevets

(11) EP 4 629 387 A1

(12) EUROPEAN PATENT APPLICATION

(43) Date of publication:
**08.10.2025 Bulletin 2025/41**

(21) Application number: **25152856.8**

(22) Date of filing: **20.01.2025**

(51) International Patent Classification (IPC):
***H01M 10/0567*** (2010.01) ***H01M 10/0525*** (2010.01)
***H01M 10/42*** (2006.01) ***H01M 4/525*** (2010.01)
***C07F 9/08*** (2006.01) *H01M 4/36* (2006.01)
*H01M 4/38* (2006.01) *H01M 4/587* (2010.01)
*H01M 10/0568* (2010.01) *H01M 10/0569* (2010.01)

(52) Cooperative Patent Classification (CPC):
**H01M 10/0567; C07F 9/08; H01M 4/525; H01M 10/0525; H01M 10/4235;** H01M 4/364; H01M 4/386; H01M 4/587; H01M 10/0568; H01M 10/0569; H01M 2300/004

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.04.2024 KR 20240045786**

(71) Applicant: **Samsung SDI Co., Ltd.**
**Yongin-si, Gyeonggi-do 17084 (KR)**

(72) Inventors:
- **Shatunov, Pavel**
**Yongin-si, Gyeonggi-do 17084 (KR)**
- **Oh, Seungryong**
**Yongin-si, Gyeonggi-do 17084 (KR)**
- **Kim, Myunghoon**
**Yongin-si, Gyeonggi-do 17084 (KR)**
- **Kim, Aeran**
**Yongin-si, Gyeonggi-do 17084 (KR)**
- **Kim, Dahyun**
**Yongin-si, Gyeonggi-do 17084 (KR)**
- **Kim, Sanghoon**
**Yongin-si, Gyeonggi-do 17084 (KR)**
- **Shin, Jeongmin**
**Yongin-si, Gyeonggi-do 17084 (KR)**
- **Tsay, Olga**
**Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

# (54) COMPOUND, ELECTROLYTE FOR RECHARGEABLE LITHIUM BATTERY INCLUDING THE SAME, AND RECHARGEABLE LITHIUM BATTERY INCLUDING SAID ELECTROLYTE

(57) A rechargeable lithium battery includes an electrolyte. The electrolyte includes a nonaqueous organic solvent, a lithium salt, and an additive represented by Chemical Formula 1.

Chemical Formula 1

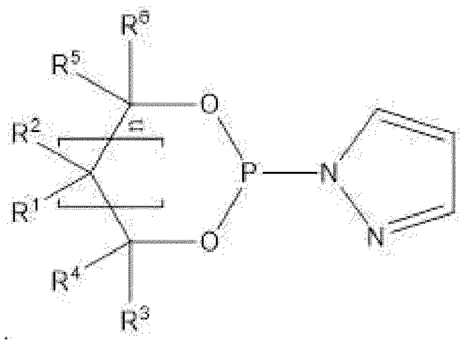

EP 4 629 387 A1

## Description

## BACKGROUND

### 1. Field

Embodiments of the present disclosure described herein are related to an electrolyte for a rechargeable lithium battery, an electrolyte additive, and a rechargeable lithium battery including the same.

### 2. Description of the Related Art

Recently, with the rapid spread of batter-using electronic devices (that use batteries), such as mobile phones, laptop computers, and/or electric vehicles, there is a rapidly increasing demand or desire for rechargeable batteries with relatively high energy density and high capacity. Therefore, intensive research has been conducted to improve performance of rechargeable lithium batteries.

A rechargeable lithium battery includes a positive electrode, a negative electrode, and an electrolyte. The positive and negative electrodes include an active material in which intercalation and deintercalation are possible, and generates electrical energy caused by oxidation and reduction reactions if (e.g., when) lithium ions are intercalated and deintercalated.

A lithium salt dissolved in a non-aqueous organic solvent is used as the electrolyte of the rechargeable lithium battery. Characteristics of the rechargeable lithium battery are exhibited by complex reactions between the positive electrode and the electrolyte and between the negative electrode and the electrolyte. Accordingly, the use of an appropriate or suitable electrolyte is an important variable for improving the rechargeable lithium battery.

## SUMMARY

The invention is defined by the appended claims. The description that follows is subjected to this limitation. Any disclosure lying outside the scope of said claims is only intended for illustrative as well as comparative purposes.

Aspects according to one or more embodiments are directed toward an electrolyte for a rechargeable lithium battery having improved high-temperature stability.

Aspects according to one or more embodiments are directed toward a rechargeable lithium battery including the electrolyte.

Additional aspects will be set forth in part in the description which follows and, in part, will be apparent from the description, or may be learned by practice of the presented embodiments of the present disclosure.

According to one or more embodiments of the present disclosure, an electrolyte for a rechargeable lithium battery includes: a non-aqueous organic solvent; a lithium salt; and an additive represented by Chemical Formula 1.

Chemical Formula 1

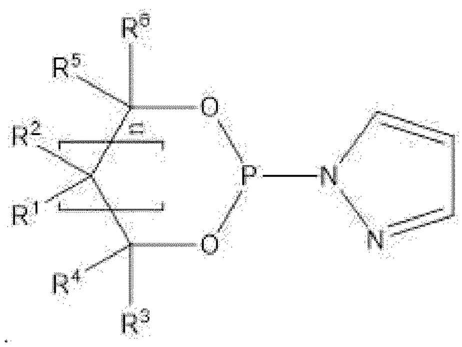

In Chemical Formula 1,

$R^1$ to $R^6$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and

n is an integer of 0 or 1.

According to one or more embodiments of the present disclosure, a compound represented by Chemical Formula 2 is provided.

Chemical Formula 2

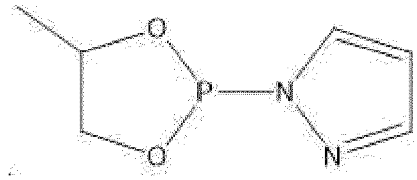

According to one or more embodiments of disclosure, a rechargeable lithium battery includes: a positive electrode that includes a positive electrode active material; a negative electrode that includes a negative electrode active material; and the above-mentioned electrolyte for the rechargeable lithium battery.

## BRIEF DESCRIPTION OF DRAWINGS

FIG. 1 illustrates a conceptual diagram showing a rechargeable lithium battery according to one or more embodiments of invention the present disclosure.

FIGS. 2-5 each illustrate a diagram showing a rechargeable lithium battery according to one or more embodiments, in which FIG. 2 shows a cylindrical battery, FIG. 3 shows a prismatic battery, and FIGS. 4 and 5 show pouch-type or kind batteries.

FIG. 6 illustrates a graph showing 1H NMR spectrum results of a compound according to Synthesis Example 1.

## DETAILED DESCRIPTION

In order to sufficiently understand the configuration and aspect of the present disclosure, one or more embodiments of the present disclosure will be described in more detail with reference to the accompanying drawings.

In this description, it will be understood that, if an element is referred to as being on another element, the element can be directly on the other element or intervening elements may be present between therebetween. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form may include the expression of plural form. The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method suitable to those skilled in the art, for example, by a particle size analyzer, a transmission electron microscope (TEM) image, or a scanning electron microscope (SEM) image. In one or more embodiments, a dynamic light-scattering measurement device is used to perform a data analysis, the number of particles is counted for each particle size range, and then from this, an average particle diameter ($D_{50}$) value may be obtained through a calculation. Dissimilarly, a laser scattering method may be utilized to measure the average particle diameter ($D_{50}$). In the laser scattering method, a target particle is distributed in a distribution solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device. Also, in the present disclosure, when particles are spherical, "diameter" indicates a particle diameter or an average particle diameter, and when the particles are non-spherical, the "diameter" indicates a major axis length or an average major axis length.

As utilized herein, expressions such as "at least one of", "one of", and "of (e.g., selected from among)", when preceding a list of elements, modify the entire list of elements and do not modify the individual elements of the list. For example, "at least one of a, b or c", "at least one selected from among a, b and c", and/or the like, may indicate only a, only b, only c, both (e.g., simultaneously) a and b, both (e.g., simultaneously) a and c, both (e.g., simultaneously) b and c, all of a, b, and c, or variations thereof.

In this description, unless otherwise separately defined, the term "substituted" refers to that at least one hydrogen of a substituent is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

For example, the term "substituted" may refer to that at least one hydrogen of a substituent is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to that at least one hydrogen of a substituent or a compound is substituted by deuterium, a halogen group, a C1 to C20 alkyl group, a C6 to C30 aryl group, a C1 to C10 fluoroalkyl group, or a cyano group. In one or more embodiments, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent is substituted by deuterium, a cyano group, a halogen group, a methyl group, an ethyl group, a propyl group, a butyl group, a phenyl group, a biphenyl group, a terphenyl group, a trifluomethyl group, or a naphthyl group.

FIG. 1 illustrates a conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

**Positive Electrode 10**

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material.

For example, the positive electrode 10 may further include an additive that can serve as a sacrificial positive electrode.

An amount of the positive electrode active material may be 90 wt% to 99.5 wt% relative to 100 wt% of the positive electrode active material layer AML1. Amounts of the binder and the conductive material may be 0.5 wt% to 5 wt% relative to 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be used to provide an electrode with conductivity, and any suitable conductive material without causing chemical change of a battery may be used as the conductive material to constitute the battery. The conductive material may include, for example, a carbon-based material such as natural graphite, artificial graphite, carbon black, acetylene black, Ketjenblack, carbon fiber, carbon nano-fiber, and carbon nano-tube; a metal powder or metal fiber containing one or more of copper, nickel, aluminum, and silver; a conductive polymer such as a polyphenylene derivative; and/or a (e.g., any suitable) mixture thereof.

Aluminum (Al) may be used as the current collector COL1, but the present disclosure is not limited thereto.

**Positive Electrode Active Material**

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from among cobalt, manganese, nickel, and/or a (e.g., any suitable) combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, and/or a (e.g., any suitable) combination thereof.

For example, the positive electrode active material may include a compound expressed by any one selected from among chemical formulae (below). $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0<\alpha<2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0<\alpha<2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); $Li_aFePO_4$ (where $0.90 \leq a \leq 1.8$).

In the chemical formulae above, A is Ni, Co, Mn, and/or a (e.g., any suitable) combination thereof, X is Al, Ni, Co, Mn, Cr, Fe, Mg, Sr, V, a rare-earth element, and/or a (e.g., any suitable) combination thereof, D is O, F, S, P, and/or a (e.g., any suitable) combination thereof, G is Al, Cr, Mn, Fe, Mg, La, Ce, Sr, V, and/or a (e.g., any suitable) combination thereof, and $L^1$ is Mn, Al, and/or a (e.g., any suitable) combination thereof.

For example, the positive electrode active material may be a high nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high nickel-based positive electrode active material may achieve high capacity and thus may be applied to a high-capacity and high-density rechargeable lithium battery.

**Negative Electrode 20**

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

For example, the negative electrode active material layer AML2 (e.g., in a total of 100 wt%) may include a negative electrode active material of 90 wt% to 99 wt%, a binder of 0.5 wt% to 5 wt%, and a conductive material of 0 wt% to 5 wt%.

The binder may serve to improve attachment of negative electrode active material particles to each other and also to improve attachment of the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include styrene-butadiene rubber, (meth)acrylated styrene-butadiene rubber, (meth) acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, and/or a (e.g., any suitable) combination thereof.

The conductive material may be used to provide an electrode with conductivity, and any suitable conductive material without causing chemical change of a battery may be used as the conductive material to constitute the battery. For example, the conductive material may include a carbon-based material such as natural graphite, artificial graphite, carbon black, acetylene black, Ketjenblack, carbon fiber, carbon nano-fiber, and carbon nano-tube; a metal powder or metal fiber

including one or more of copper, nickel, aluminum, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite such as non-shaped, sheet-shaped, flake-shaped, sphere-shaped, or fiber-shaped natural or artificial graphite, and the amorphous carbon may include soft carbon, hard carbon, mesophase pitch carbon, or calcined coke.

The lithium metal alloy may include an alloy of lithium and metal that is selected from among Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, SiOx (where $0<x<2$), Si-Q alloy (where Q is alkali metal, alkaline earth metal, Group 13 element, Group 14 element (except for Si), Group 15 element, Group 16 element, transition metal, a rare-earth element, and/or a (e.g., any suitable) combination thereof), and/or a (e.g., any suitable) combination thereof. The Sn-based negative electrode active material may include Sn, SnOx ($0<x\leq 2$), e.g., $SnO_2$, a Sn-based alloy, a combination thereof.

The silicon-carbon composite may be a composite of silicon and amorphous carbon. According to one or more embodiments, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

**Separator 30**

Based on type or kind of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, which coating layer includes an organic material, an inorganic material, and/or a (e.g., any suitable) combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, and polytetrafluoroethylene (e.g., Teflon), and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, Boehmite, and/or a (e.g., any suitable) combination thereof, but the present disclosure is not limited thereto.

The organic material and the inorganic material may be present as mixed in one coating layer or may be present

as a stack of a coating layer including the organic material and a coating layer including an inorganic material.

**Electrolyte ELL**

The electrolyte ELL for the rechargeable lithium battery may include a non-aqueous organic solvent and a lithium salt.

The non-aqueous organic solvent may serve as a medium for transmitting ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, caprolactone, or propyl propionate (PP).

The ether-based solvent may include dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, if (e.g., when) a carbonate-based solvent is used, a cyclic carbonate and a chain carbonate may be mixed and used, and the cyclic carbonate and the chain carbonate may be mixed in a volume ratio of 1:1 to 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers between 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

The following will describe in more detail an electrolyte for a rechargeable lithium battery according to one or more embodiments of the present disclosure.

An electrolyte for a rechargeable lithium battery according to one or more embodiments includes a non-aqueous organic solvent, a lithium salt, and an additive represented by Chemical Formula 1.

Chemical Formula 1

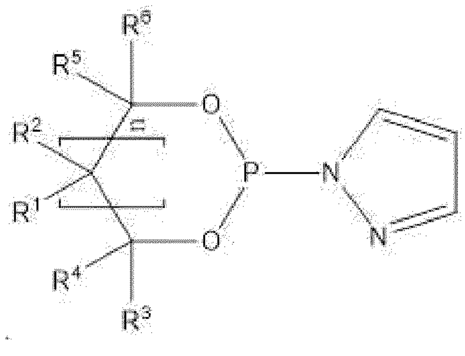

In Chemical Formula 1,

$R^1$ to $R^6$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

n is an integer of 0 or 1.

The electrolyte may be manufactured by a mixing process in which a lithium salt is dissolved in a non-aqueous organic solvent and the additive expressed by Chemical Formula 1 above is added to mix. The electrolyte mixing process is a suitable process in electrolyte fabrication field, and a person skilled in the art will be able to appropriately or suitably select and use.

The non-aqueous organic solvent may include at least one selected from among ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), and butylene carbonate (BC).

In one or more embodiments, the non-aqueous organic solvent may be a mixed solvent of ethylmethyl carbonate (EMC), ethylene carbonate (EC), and dimethyl carbonate (DMC).

In one or more embodiments, the ethylmethyl carbonate (EMC) solvent may be included in an amount of 5 vol% to 15 vol% relative to the total volume of the non-aqueous organic solvent. The ethylene carbonate (EC) may be included in an amount of 5 vol% to 40 vol% relative to the total volume of the non-aqueous organic solvent. The dimethyl carbonate (DMC) may be included in an amount of 5 vol% to 90 vol% relative to the total volume of the non-aqueous organic solvent. In one or more embodiments, the ethylmethyl carbonate (EMC) may be included in an amount of 5 vol% to 15 vol% relative to the total volume of the non-aqueous organic solvent. The ethylene carbonate (EC) may be included in an amount of 10 vol% to 30 vol% relative to the total volume of the non-aqueous organic solvent. The dimethyl carbonate (DMC) may be included in an amount of 50 vol% to 80 vol% relative to the total volume of the non-aqueous organic solvent.

In one or more embodiments, the lithium salt may include $LiPF_6$.

The lithium salt may have a concentration of 0.1 M to 2.0 M. For example, the lithium salt may have a concentration of equal to or greater than 0.5 M or 1.0 M. The lithium salt may have a concentration of equal to or less than 2.0 M, equal to or less than 1.7 M, or equal to or less than 1.5 M. In the present disclosure, if (e.g., when) the lithium salt has a concentration of 0.1 M to 2.0 M, the electrolyte may appropriately or suitably maintain its conductivity and viscosity.

**Additive**

The additive according to the present disclosure is represented by Chemical Formula 1.

Chemical Formula 1

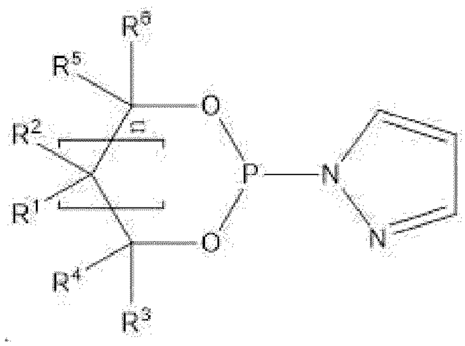

In Chemical Formula 1,

$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

n is an integer of 0 or 1. n being zero refers to a direct bond. For example, if n is zero, a cyclic phospholane derivative portion containing a -OPO- functional group may be a pentagonal ring.

In one or more embodiments, Chemical Formula 1 above may be represented by Chemical Formula 1A or 1B.

Chemical Formula 1A

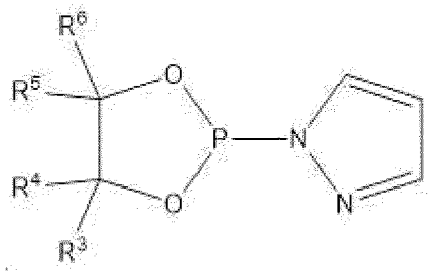

Chemical Formula 1B

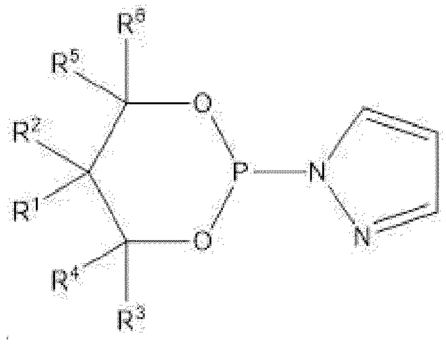

In Chemical Formula 1A and Chemical Formula 1B,
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In one or more embodiments, $R^3$ and $R^4$ of Chemical Formula 1A above may each be hydrogen.

At least one selected from among $R^5$ and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In one or more embodiments, the additive represented by Chemical Formula 1 above may be at least one selected from among compounds listed in Group 1. For example, the additive represented by Chemical Formula 1 above may be at least one selected from among 1-(1,3,2-dioxaphospholan-2-yl)-1H-1,2,4-pyrazole and 1-(4-methyl-1,3,2-dioxaphospholan-2-yl)-1H-1,2,4-pyrazole.

Group 1

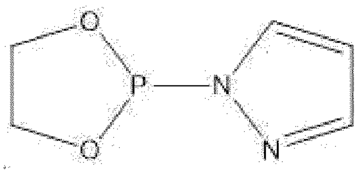

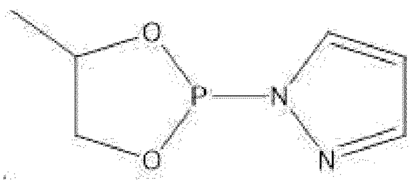

In one or more embodiments, the additive represented by Chemical Formula 1 above may be a compound represented by Chemical Formula 2.

Chemical Formula 2

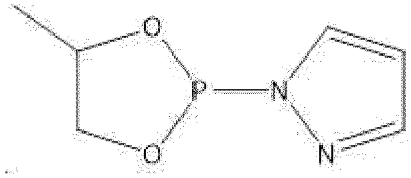

An amount of the additive expressed by Chemical Formula 1 above may be 0.01 to 5.0 parts by weight relative to 100 parts by weight (which can also be expressed as 100 wt%) of the electrolyte for a rechargeable lithium battery. For example, the amount of the additive may be 0.1 to 3.5 parts by weight or 0.25 to 3.5 parts by weight relative to 100 parts by weight of the electrolyte for a rechargeable lithium battery. An amount of the additive may refer to a weight of the additive included in the electrolyte relative to the total weight of the electrolyte. When the amount of the additive satisfies the ranges above, there may be a maximized or increased effect of a reduction in gas generation and suppression of resistance increase at high temperatures.

The additive represented by Chemical Formula 1 above includes an -OPO-functional group. The -OPO-functional group may stabilize a thermal decomposition product of the lithium salt or an anion dissociated from the lithium salt to thereby reduce gas generation in the battery. For example, the -OPO- functional group may reduce HF gas generation by stabilizing $PF_5^-$ generated if (e.g., when) $LiPF_6$ is thermally decomposed.

The -OPO-functional group included in the additive represented by Chemical Formula 1 is derived from cyclic phospholane. Compared to a linear phosphite derivative, the cyclic phospholane derivative may cause a rechargeable lithium battery to have a significant improvement in lifetime characteristics. The linear phosphite may not be suitable for high temperature due to its ability to induce a side reaction of $LiPF_6$ due to a dissociated $-PO_2-$ functional group to cause gas generation resulting from a decomposition reaction that occurs in the electrolyte at high-temperature storage and its low capability to form a solid electrolyte interface (SEI) layer.

The additive represented by Chemical Formula 1 above includes a pyrazole functional group. The pyrazole group is a compound with string polarity and may be advantageously used as an additive of a rechargeable lithium battery due to its high solubility for an electrolyte using a polar solvent such as ethylene carbonate.

In addition, a lone pair of electrons in nitrogen (N) of the pyrazole group may act on Lewis acid (e.g., $PF_5$) possibly present in the electrolyte, thereby stabilizing the Lewis acid. This may reduce a substantially continuous decomposition reaction of the lithium salt to prevent or reduce the electrolyte from becoming acidic. The lone pair of electrons of the pyrazole group may stabilize a transition metal on a surface of the positive electrode and a transition metal released from the surface of the positive electrode. This may prevent or reduce a deterioration of the positive electrode to increase a lifetime of the battery.

The pyrazole group may be an amphoteric substance to act as acid or base. The acidity of the pyrazole group may be originated from an -NH group and may be a cause of battery deterioration. The additive according to the present disclosure may allow nitrogen (N) in the pyrazole group to be directly covalently bonded to phosphorus (P). In this case, because the -NH group of the pyrazole group is eliminated, only basicity of the pyrazole group may be effectively used.

Compared to imidazole, the pyrazole functional group included in the additive represented by Chemical Formula 1 above may significantly improve high-temperature characteristics of the rechargeable lithium battery. Pyrazole may indicate 1,2-diazacyclopenta-2,4-diene, and imidazole may indicate 1,3-diazacyclopenta-2,4-diene.

The additive according to one or more embodiments of the present disclosure includes both of the -OPO-functional group and the pyrazole functional group, and thus exhibits an excellent or suitable effect of suppression or reduction in resistance increase and reduction in gas generation.

An improvement in high-temperature stability of the rechargeable lithium battery caused by the additive represented by Chemical Formula 1 above becomes even more pronounced if the additive is used together with a high nickel-based positive electrode active material and a negative electrode active material including a silicon-carbon composite. For example, silicon particles may be utilized to increase battery capacity, but there may be a problem of an increase in battery internal resistance due to a side reaction between the silicon particles and the electrolyte. Because the additive suppresses the side reaction between the silicon particles and the electrolyte, an increase in battery internal resistance may be minimized or reduced and an increase in battery capacity may be maximized or increased.

**Rechargeable Lithium Battery**

Based on a shape of a rechargeable lithium battery, the rechargeable lithium battery may be classified into cylindrical, prismatic, pouch, and coin types (kinds). In FIGS. 2 to 5 illustrating diagrams each showing a rechargeable lithium battery according to one or more embodiments, FIG. 2 shows a cylindrical battery, FIG. 3 shows a prismatic battery,

and FIGS. 4 and 5 each show pouch-type or kind batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72, which electrode tab 70 serves as an electrical path for externally inducing a current generated in the electrode assembly 40.

A rechargeable lithium battery according to one or more embodiments of the present disclosure may be applied to automotive vehicles, mobile phones, and/or any other electrical devices, but the present disclosure is not limited thereto.

A rechargeable lithium battery according to the present disclosure includes a positive electrode including a positive electrode active material, a negative electrode including a negative electrode active material, and the aforementioned electrolyte for the rechargeable lithium battery.

The positive electrode active material may include lithium composite oxide represented by Chemical Formula 3.

Chemical Formula 3 $$Li_xM^1_yM^2_zM^3_{1-y-z}O_{2-a}X_a$$

In Chemical Formula 3, x, y, z, and a satisfy $0.5 \leq x \leq 1.8$, $0 \leq a \leq 0.05$, $0 < y \leq 1$, $0 \leq z \leq 1$, and $0 \leq y+z \leq 1$.

$M^1$, $M^2$, and $M^3$ are each independently at least one element selected from among Ni, Co, Mn, Al, B, Ba, Ca, Ce, Cr, Fe, Mo, Nb, Si, Sr, Mg, Ti, V, W, Zr, and La.

X is at least one element selected from among F, S, P, and Cl.

In one or more embodiments, in Chemical Formula 3 above, $M^1$ may be Ni, y may be $0.8 \leq y \leq 1$, and z may be $0 \leq z \leq 0.2$. In one or more embodiments, in Chemical Formula 3, $M^1$ may be Ni, $M^2$ may be Co, and $M^3$ may be Al. Dissimilarly, in Chemical Formula 3, $M^1$ may be Ni, $M^2$ may be Co, and $M^3$ may be Mn.

In one or more embodiments, the positive electrode active material of the rechargeable lithium battery may include nickel, cobalt, and aluminum. In one or more embodiments, the positive electrode active material of the rechargeable lithium battery may include nickel, cobalt, and manganese.

The negative electrode active material may be a carbon-based negative electrode active material, a Si-based negative electrode active material, a Sn-based negative electrode active material, and/or a (e.g., any suitable) combination thereof.

In one or more embodiments, the Si-based negative electrode active material may be a silicon-carbon composite.

When the positive electrode includes a high nickel-based positive electrode active material, and if (e.g., when) the negative electrode includes a silicon-carbon composite, the rechargeable lithium battery may maximally improve in high-temperature stability. The rechargeable lithium battery composed of such combination may operate even at high voltages of equal to or greater than about 4.2 V.

In the rechargeable lithium battery according to one or more embodiments of the present disclosure, a non-aqueous electrolyte may be decomposed during an initial charge-discharge to form a film having passivation ability on the surfaces of the positive and negative electrodes to improve high-temperature storage characteristics. The film may be deteriorated due to acids such as HF- and/or $PF_5^-$ produced by thermal decomposition of lithium salts ($LiPF_6$ and/or the like) used in lithium ion batteries. This acid attack may elute transition metal elements from the positive electrode and increase a surface resistance of the electrode caused by a structural change of the surface. Thus, a theoretical capacity may be reduced due to loss of metal elements which are redox (reduction and oxidation) centers, which may result in a reduction in capacity. In addition, the eluted transition metal ions may be electrodeposited on the negative electrode that reacts in a strong reduction potential range. Therefore, electrons may be consumed and the film may be destroyed during the electrodeposition, and accordingly the surface of the negative electrode may be exposed to cause an additional electrolyte decomposition reaction. There may thus be an increase in resistance of the negative electrode and in irreversible capacity, and as a result, there may be a problem of substantially continuous reduction in cell capacity.

In the present disclosure, the -OPO- functional group and the pyrazole functional group of the additive represented by Chemical Formula 1 above provide an unshared electron pair to capture $PF_5^-$ and stabilize a $LiPF_6$ salt, with the result that it may be possible to remove the acid(s) led (produced) by decomposition of the lithium salt in the electrolyte.

In addition, the -OPO- functional group and the pyrazole functional group of the additive represented by Chemical Formula 1 above may stabilize transition metal on the surface of the positive electrode and transition metal released from the surface of the positive electrode, and thus the rechargeable lithium battery may improve in high-temperature stability.

The following will describe Examples (Embodiments) and Comparative Examples of the present disclosure.

**Synthesis Example 1**

To 40mL of petroleum ether containing 5.61g (0.04 mol) of 1-(trimethylsilyl)-1H-pyrazole, 5.62g (0.04 mol) of 2-chloro-4-methyl-1,3,2-dioxaphospholane was added dropwise and stirred for 10 minutes at room temperature (25°C) under an inert atmosphere. The reaction mixture was stirred for 24 hours to evaporate a volatile component, and then a residue was fractionated under 3 Torr at 77°C to obtain a compound represented by Chemical Formula 2.

Chemical Formula 2

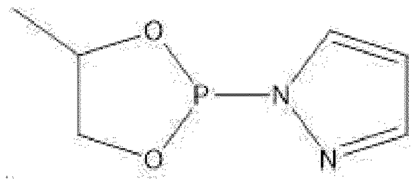

**Embodiment 1**

**(1) Preparation of Electrolyte**

1.5M $LiPF_6$ was dissolved in a non-aqueous organic solvent containing ethylene carbonate (EC), ethylmethyl carbonate (EMC), and dimethyl carbonate (DMC) mixed in a volume ratio of 20:10:70, and the additive represented by Chemical Formula 2 obtained in Synthesis Example 1 was added to prepare an electrolyte.

An amount of the additive was 0.5 parts by weight relative to 100 parts by weight of the electrolyte.

**(2) Fabrication of Rechargeable Lithium Battery**

$LiNi_{0.91}Co_{0.07}Al_{0.02}O_2$ as a positive electrode active material, polyvinylidene fluoride as a binder, and Ketjenblack as a conductive material were mixed in a weight ratio of 97:2:1, and the mixture was dispersed in N-methyl pyrrolidone to prepare a positive electrode active material slurry.

The positive electrode active material slurry was coated on an aluminum current collector of 14μm in thickness, dried at 110°C, and then pressed to manufacture a positive electrode.

Artificial graphite and silicon nano-particles mixed in a weight ratio of 93:7 as a negative electrode active material, styrene butadiene rubber (SBR) as a binder, and carboxymethyl cellulose (CMC) as a thickener were mixed in a weight ratio of 97:1:2, and the mixture was distributed in distilled water to prepare a negative electrode active material slurry.

The negative electrode active material slurry was coated on a copper current collector of 10μm in thickness, dried at 100°C, and then pressed to manufacture a negative electrode.

The positive electrode, the negative electrode, and a polyethylene separator of 25μm in thickness were assembled to manufacture an electrode assembly, and the electrolyte was introduced to fabricate a rechargeable lithium battery.

**Embodiment 2**

An electrolyte and a rechargeable lithium battery were fabricated in substantially the same method as in Embodiment 1, except that an amount of the additive was 1 part by weight relative to 100 parts by weight of the electrolyte.

**Embodiment 3**

An electrolyte and a rechargeable lithium battery were fabricated in substantially the same method as in Embodiment 1, except that an amount of the additive was 3 parts by weight relative to 100 parts by weight of the electrolyte.

**Embodiment 4**

An electrolyte and a rechargeable lithium battery were fabricated in substantially the same method as in Embodiment 1, except that an amount of the additive was 5 parts by weight relative to 100 parts by weight of the electrolyte.

**Comparative Example 1**

An electrolyte and a rechargeable lithium battery were fabricated in substantially the same method as in Embodiment 1, except that an additive represented by Chemical Formula 4 was added and that an amount of the additive was 2 parts by weight relative to 100 parts by weight of the electrolyte.

Chemical Formula 4

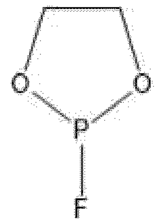

**Comparative Example 2**

An electrolyte and a rechargeable lithium battery were fabricated in substantially the same method as in Embodiment 1, except that no additive is added.

**Evaluation Example 1: Resistance Increase Rate at High-Temperature Storage**

The rechargeable lithium batteries fabricated in Embodiments and Comparative Examples were charged at 25°C with 0.33 C-rate and 4.25 V, and an initial battery resistance value and a battery resistance value after being left for 60 days at 55°C were measured. A resistance increase rate was measured and the result was listed in Table 1. The resistance values were measured by using electrochemical impedance spectroscopy (EIS).

The resistance increase rate was calculated according to Equation 1.

Equation 1

$$\text{Resistance increase rate (\%)} = \{(\text{resistance after 60 days/initial resistance}) - 1\} \times 100$$

**Evaluation Example 2: Gas Generation at High-Temperature Storage**

The rechargeable lithium batteries fabricated in Embodiments and Comparative Examples were charged at 25°C with 4.25 V, left at 55°C for 60 days, and then refinery gas analysis (RGA) was utilized to measure a gas generation amount (mL). The result was listed in Table 1.

Table 1

| | Amount | | Evaluation Result | |
|---|---|---|---|---|
| | Chemical Formula 2 (wt%) | Chemical Formula 4 (wt%) | Resistance Increase Rate (%) | Gas Generation Amount (mL) |
| Comparative Example 1 | 0 | 2 | 20.2 | 37.3 |
| Comparative Example 2 | 0 | 0 | 21.9 | 39.8 |
| Embodiment 1 | 0.5 | 0 | 12.1 | 22.0 |
| Embodiment 2 | 1 | 0 | 10.4 | 18.9 |
| Embodiment 3 | 3 | 0 | 13.9 | 25.2 |
| Embodiment 4 | 5 | 0 | 20.3 | 36.9 |

Referring to Table 1, it may be observed that the resistance increase rate at a high-temperature (55°C) is similar or less in the cases (Embodiments 1 to 4) that each use an electrolyte including the additive according to the present disclosure than in the case (Comparative Example 1) that uses an electrolyte including the additive represented by Chemical Formula 4 and the case (Comparative Example 2) that uses an electrolyte including no additive. For example, it may be ascertained that Embodiments 1 to 4 have an excellent or suitable effect of suppression or reduction in resistance increase rate of batteries.

Referring to Table 1, it may be observed that the gas generation amount at a high-temperature (55°C) is less in the cases (Embodiments 1 to 4) that use an electrolyte including the additive according to the present disclosure than in the case (Comparative Example 1) that uses an electrolyte including the additive represented by Chemical Formula 4 and the case (Comparative Example 2) that uses an electrolyte including no additive. For example, it may be ascertained that Embodiments 1 to 4 have an excellent or suitable effect of reduction in gas generation.

An electrolyte for a rechargeable lithium battery according to one or more embodiments may exhibit an effect of suppression or reduction in internal resistance increase and reduction in gas generation. The effect may become pronounced at high temperatures.

**Claims**

1. An electrolyte for a rechargeable lithium battery (100) comprising:

   a non-aqueous organic solvent;
   a lithium salt; and
   an additive represented by Chemical Formula 1,

   Chemical Formula 1

   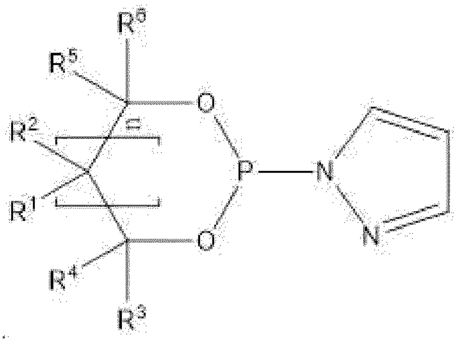

   ,

   wherein, in Chemical Formula 1,
   $R^1$ to $R^6$ are each independently hydrogen, a substituted or unsubstituted C1 to C20 alkyl group, a substituted or unsubstituted C1 to C20 alkoxy group, a substituted or
   unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
   n is an integer of 0 or 1,
   wherein the term "substituted" refers to that at least one hydrogen of a substituent is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

2. The electrolyte as claimed in claim 1, wherein Chemical Formula 1 is represented by Chemical Formula 1A or Chemical Formula 1B,

Chemical Formula 1A

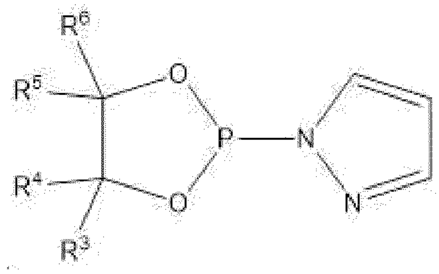

Chemical Formula 1B

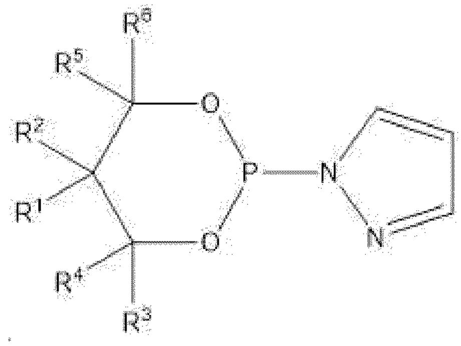

,

wherein, in Chemical Formula 1Aand Chemical Formula 1B,
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**3.** The electrolyte as claimed in claim 2, wherein

each of $R^3$ and $R^4$ of Chemical Formula 1A is hydrogen, and
at least one selected from among $R^5$ and $R^6$ is a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**4.** The electrolyte as claimed in claim 1, wherein the additive represented by Chemical Formula 1 is at least one selected from among compounds listed in Group 1,

Group 1

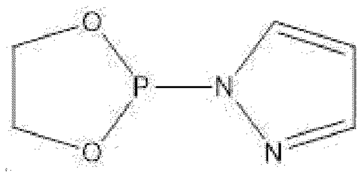

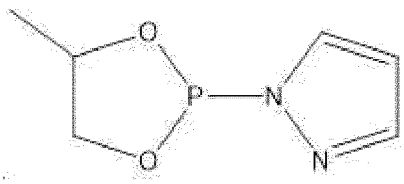

.

**5.** The electrolyte as claimed in any one of the preceding claims, wherein an amount of the additive is 0.01 to 5.0 parts of weight relative to 100 parts by weight of the electrolyte for the rechargeable lithium battery.

**6.** The electrolyte as claimed in any one of the preceding claims, wherein the non-aqueous organic solvent comprises a carbonate-based solvent.

7. The electrolyte as claimed in claim 6, wherein the carbonate-based solvent comprises ethylmethyl carbonate (EMC), ethylene carbonate (EC), and dimethyl carbonate (DMC).

8. The electrolyte as claimed in claim 7, wherein the carbonate-based solvent comprises ethylmethyl carbonate (EMC), ethylene carbonate (EC), and dimethyl carbonate (DMC) have a volume ratio of 1:a:b, and

wherein a is 1 to 3, and
b is 5 to 8.

9. The electrolyte as claimed in any one of the preceding claims, wherein the lithium salt comprises $LiPF_6$.

10. The electrolyte as claimed in any one of the preceding claims, wherein a concentration of the lithium salt is in a range of 0.1 M to 2.0 M.

11. A compound represented by Chemical Formula 2,

Chemical Formula 2

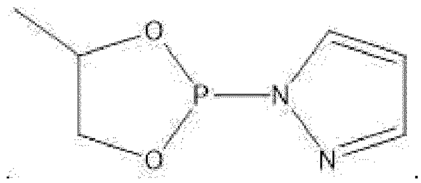

12. A rechargeable lithium battery (100), comprising:

a positive electrode (10) that comprises a positive electrode active material;
a negative electrode (20) that comprises a negative electrode active material; and
the electrolyte as claimed in any one of claims 1 to 10.

13. The rechargeable lithium battery (100) as claimed in claim 12, wherein the positive electrode active material comprises lithium composite oxide represented by Chemical Formula 3,

Chemical Formula 3 $Li_xM1_yM^2_zM^3_{1-y-z}O_{2-a}X_a$,

wherein $0.5 \leq x \leq 1.8$, $0 \leq a \leq 0.05$, $0 < y \leq 1$, $0 \leq z \leq 1$, and $0 \leq y+z \leq 1$,
wherein $M^1$, $M^2$, and $M^3$ are each independently at least one element selected from among Ni, Co, Mn, Al, B, Ba, Ca, Ce, Cr, Fe, Mo, Nb, Si, Sr, Mg, Ti, V, W, Zr, and La, and
wherein X is at least one element selected from among F, S, P, and Cl.

14. The rechargeable lithium battery (100) as claimed in claim 13, wherein, in Chemical Formula 3, $M^1$ is Ni, y is $0.8 \leq y \leq 1$, and z is $0 \leq z \leq 0.2$.

15. The rechargeable lithium battery (100) as claimed in claim 12, wherein the negative electrode active material comprises a carbon-based negative electrode active material, a Si-based negative electrode active material, a Sn-based negative electrode active material, or a combination thereof.

FIG. 1

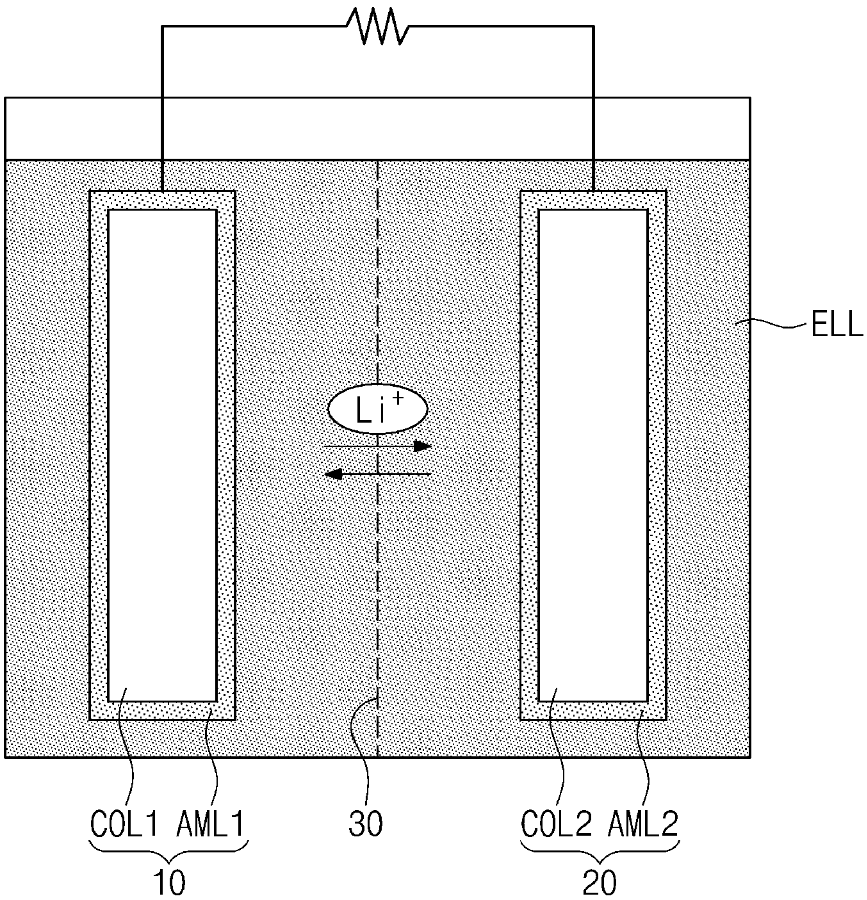

FIG. 2

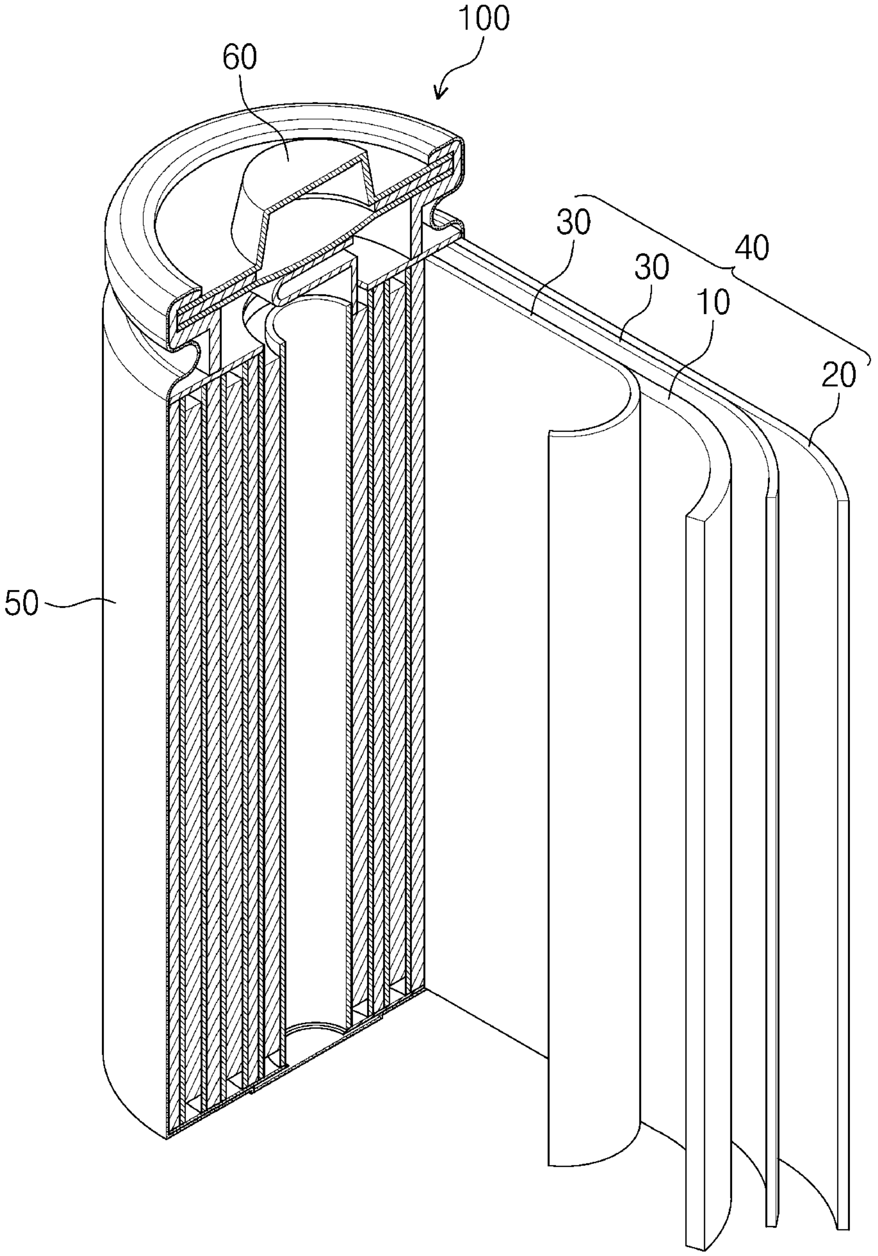

FIG. 3

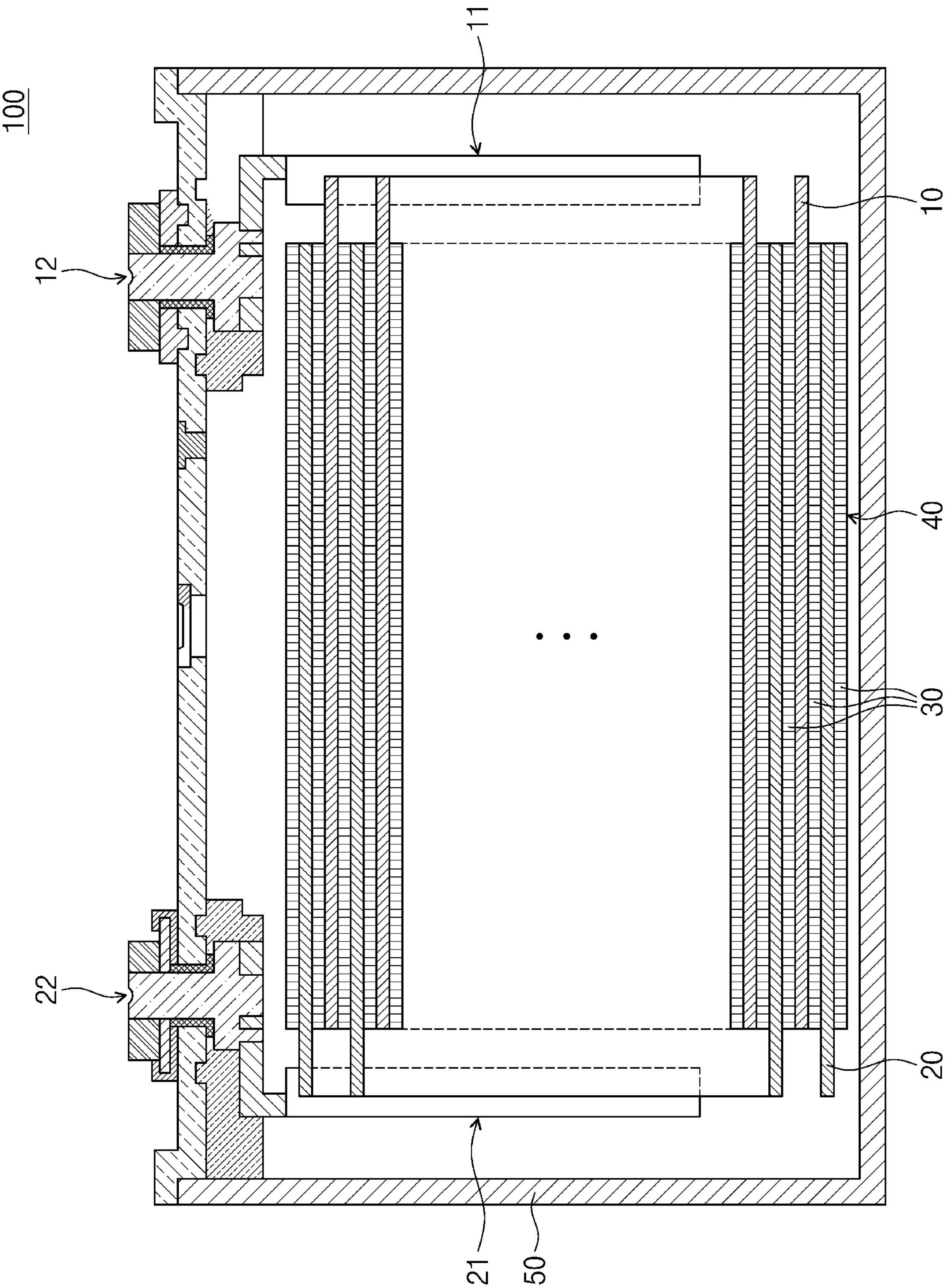

FIG. 4

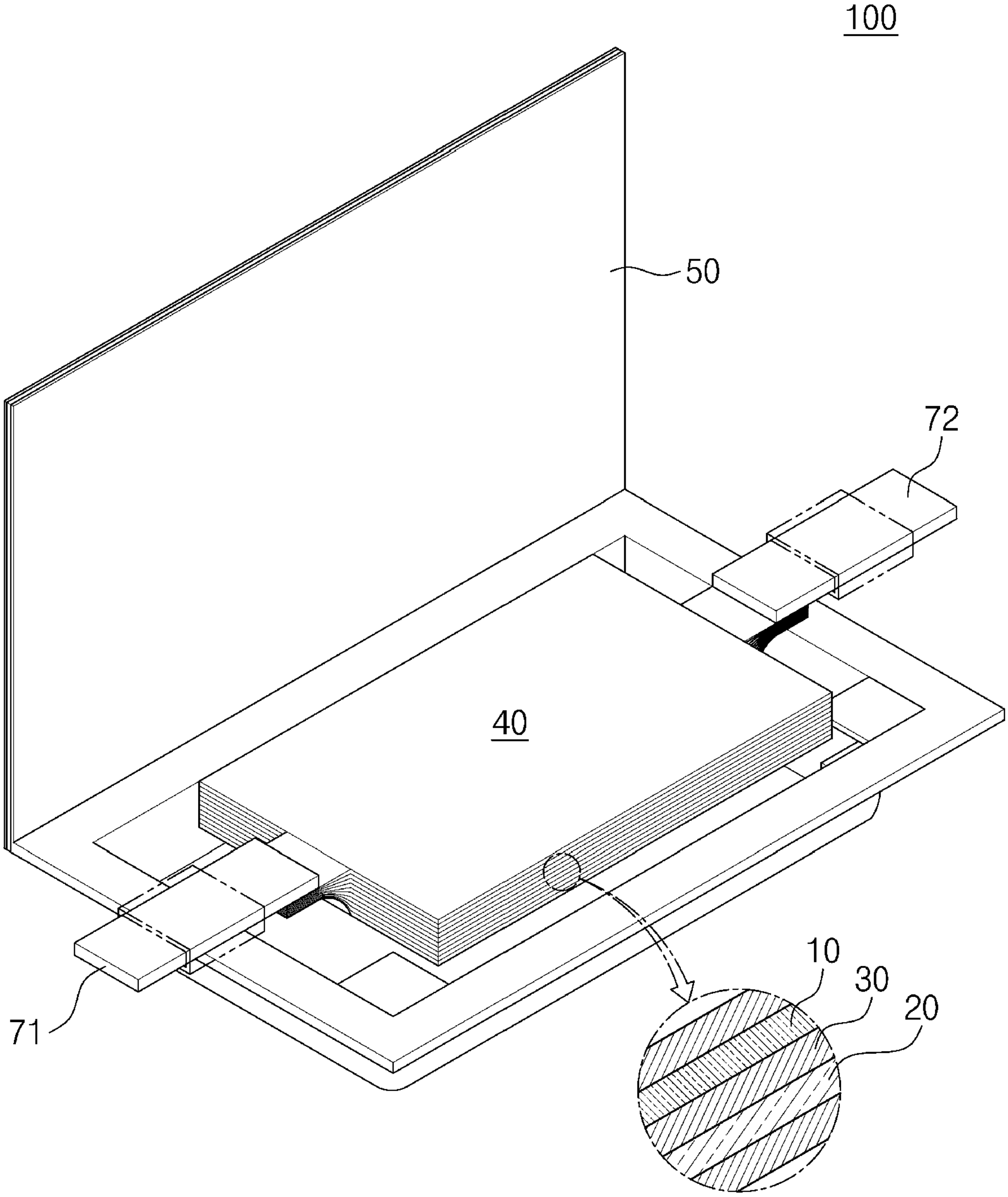

FIG. 5

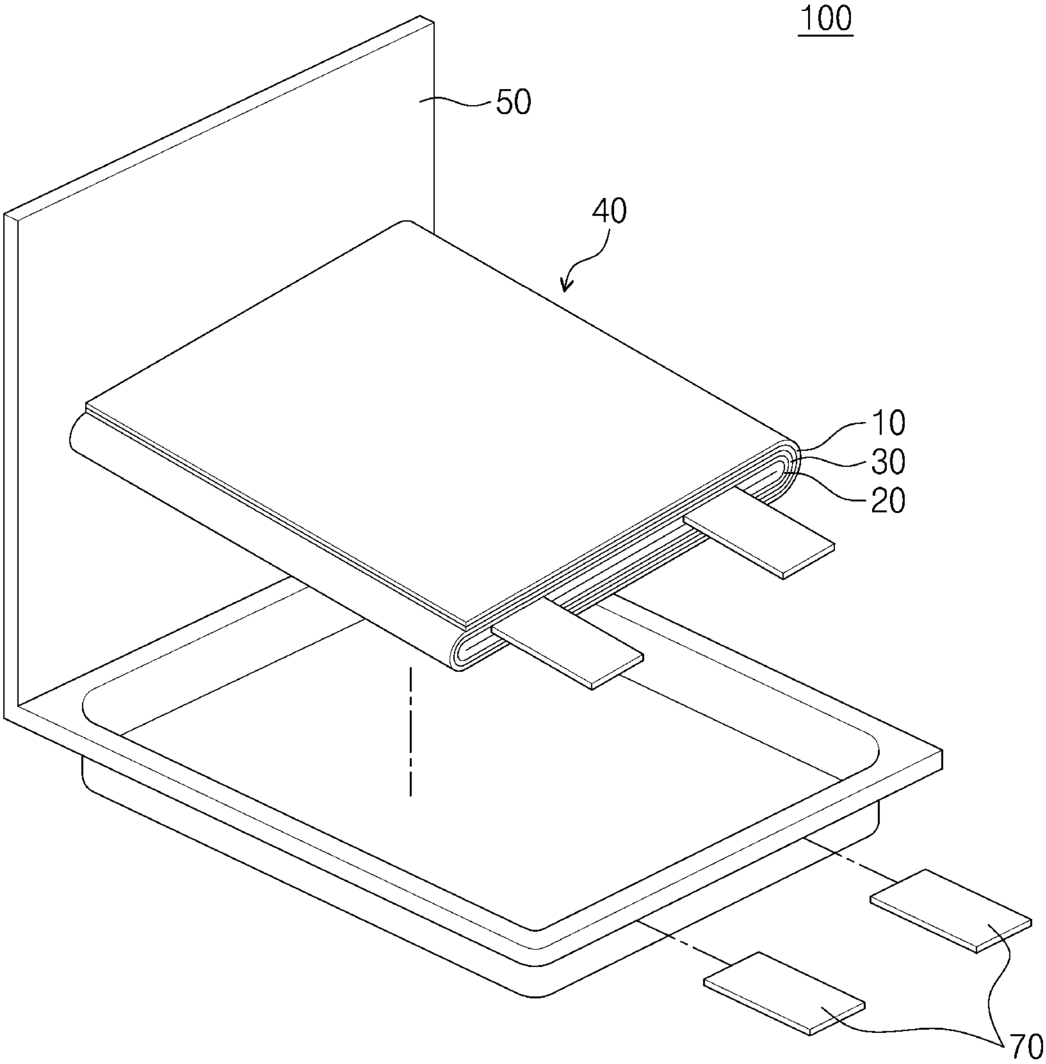

FIG. 6

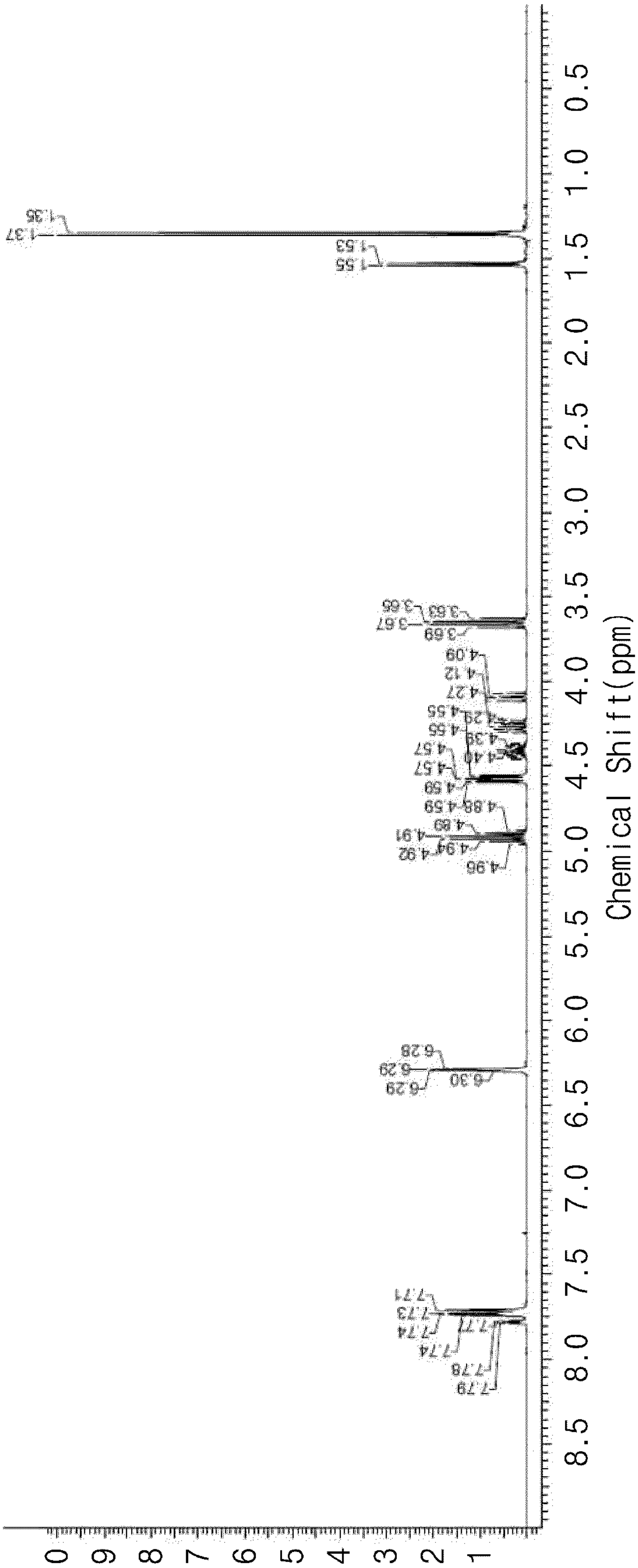

Europäisches Patentamt
European Patent Office
Office européen des brevets

# EUROPEAN SEARCH REPORT

Application Number
EP 25 15 2856

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 2022 0169292 A (LG CHEM, LTD.) 27 December 2022 (2022-12-27)<br>* abstract *<br>* paragraph [0099] - paragraph [0100]; compound f *<br>* example 6 *<br>* claims 1, 6-10 *<br>----- | 1-15 | INV.<br>H01M10/0567<br>H01M10/0525<br>H01M10/42<br>H01M4/525<br>C07F9/08<br><br>ADD.<br>H01M4/36<br>H01M4/38<br>H01M4/587<br>H01M10/0568<br>H01M10/0569 |
| Y | US 2021/328266 A1 (LG ENERGY SOLUTION, LTD.) 21 October 2021 (2021-10-21)<br>* paragraph [0014] - paragraph [0019] *<br>* paragraph [0030] - paragraph [0036] *<br>* paragraph [0040] - paragraph [0044] *<br>* paragraph [0052] - paragraph [0059] *<br>* paragraph [0062] - paragraph [0068] *<br>* paragraph [0085] - paragraph [0092] *<br>* paragraph [0096] - paragraph [0100] *<br>* examples 1, 2 *<br>* claims 1-3, 5-7, 10 *<br>----- | 1-15 | |
| | | | TECHNICAL FIELDS SEARCHED (IPC) |
| A | WO 2024/045788 A1 (SHENZHEN CAPCHEM TECHNOLOGY CO., LTD.)<br>7 March 2024 (2024-03-07)<br>* abstract *<br>* page 2, lines 5-6 *<br>* examples 1-14; table 1 *<br>* claims 1, 4-6, 9, 11, 12 *<br>----- | 1-15 | C07F<br>H01G<br>H01M |
| A | US 2023/098836 A1 (SAMSUNG SDI CO., LTD.) 30 March 2023 (2023-03-30)<br>* paragraph [0008] - paragraph [0038] *<br>* paragraph [0045] - paragraph [0050] *<br>* paragraph [0056] - paragraph [0066] *<br>* paragraph [0073] - paragraph [0078] *<br>* paragraph [0083] - paragraph [0111] *<br>* paragraph [0116] - paragraph [0133] *<br>* examples 1-9 *<br>* claims 1-5, 7-9, 13-16 *<br>-----<br>-/-- | 1-15 | |

The present search report has been drawn up for all claims

2

| Place of search | Date of completion of the search | Examiner |
|---|---|---|
| Munich | 24 June 2025 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 15 2856

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/063361 A1 (SAMSUNG SDI CO., LTD.) 2 March 2023 (2023-03-02)<br>* paragraph [0008] - paragraph [0032] *<br>* paragraph [0039] - paragraph [0043] *<br>* paragraph [0046] - paragraph [0055] *<br>* paragraph [0062] - paragraph [0067] *<br>* paragraph [0072] - paragraph [0081] *<br>* paragraph [0086] - paragraph [0102] *<br>* examples 1-9 *<br>* claims 1-6, 8-12, 16 *<br>----- | 1-15 | |
| A | EP 3 818 579 B1 (FORSCHUNGSZENTRUM JUELICH GMBH; JACOBS UNIVERSITY BREMEN GGMBH) 6 July 2022 (2022-07-06)<br>* paragraph [0029] - paragraph [0035] *<br>* paragraph [0047] - paragraph [0060] *<br>* paragraph [0067] - paragraph [0069] *<br>* paragraph [0075] - paragraph [0080]; tables 1-3 *<br>* claims 1, 7-10 *<br>----- | 1-15 | TECHNICAL FIELDS SEARCHED (IPC) |
| A | CN 108 428 942 A (XIAMEN SHOUNENG TECHNOLOGY CO., LTD.) 21 August 2018 (2018-08-21)<br>* abstract *<br>* examples 1-8; table 1 *<br>* claims 1, 3, 4, 6, 7 *<br>----- | 1-15 | |

The present search report has been drawn up for all claims

2

| Place of search | Date of completion of the search | Examiner |
|---|---|---|
| Munich | 24 June 2025 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 2856

This annex lists the patent family members relating to the patent documents cited in the above-mentioned European search report. The members are as contained in the European Patent Office EDP file on
The European Patent Office is in no way liable for these particulars which are merely given for the purpose of information.

24-06-2025

| Patent document cited in search report | Publication date | Patent family member(s) | Publication date |
|---|---|---|---|
| KR 20220169292 A | 27-12-2022 | NONE | |
| US 2021328266 A1 | 21-10-2021 | CN 113692668 A | 23-11-2021 |
| | | EP 3879617 A1 | 15-09-2021 |
| | | ES 3026663 T3 | 11-06-2025 |
| | | KR 20200074902 A | 25-06-2020 |
| | | US 2021328266 A1 | 21-10-2021 |
| | | WO 2020130575 A1 | 25-06-2020 |
| WO 2024045788 A1 | 07-03-2024 | CN 117673455 A | 08-03-2024 |
| | | WO 2024045788 A1 | 07-03-2024 |
| US 2023098836 A1 | 30-03-2023 | CN 115732741 A | 03-03-2023 |
| | | EP 4142007 A1 | 01-03-2023 |
| | | US 2023098836 A1 | 30-03-2023 |
| US 2023063361 A1 | 02-03-2023 | CN 115719828 A | 28-02-2023 |
| | | EP 4142005 A1 | 01-03-2023 |
| | | KR 20230031008 A | 07-03-2023 |
| | | US 2023063361 A1 | 02-03-2023 |
| EP 3818579 B1 | 06-07-2022 | CN 112470311 A | 09-03-2021 |
| | | DE 102018116475 A1 | 09-01-2020 |
| | | EP 3818579 A1 | 12-05-2021 |
| | | HU E059929 T2 | 28-01-2023 |
| | | JP 7453158 B2 | 19-03-2024 |
| | | JP 2021528806 A | 21-10-2021 |
| | | PL 3818579 T3 | 09-01-2023 |
| | | US 2021273263 A1 | 02-09-2021 |
| | | WO 2020007425 A1 | 09-01-2020 |
| CN 108428942 A | 21-08-2018 | NONE | |

EPO FORM P0459

For more details about this annex : see Official Journal of the European Patent Office, No. 12/82